# EUROPÄISCHE PATENTANMELDUNG

(11) **EP 4 517 133 A1**
(43) Veröffentlichungstag der Anmeldung: **05.03.2025**
(21) Anmeldenummer: 23194857.1
(22) Anmeldetag: 01.09.2023
(51) Int. Cl.: F16H 47/08, F16H 57/021, F16H 47/04, F16H 57/02

(54) **STUFENLOSGETRIEBE**

(71) Anmelder: Deere & Company, Moline, IL 61265 (US)
(72) Erfinder: LANG, MATTHIAS, 68163 Mannheim (DE); MUELLER, DAVID, 68163 Mannheim (DE); BUHRKE, FRANK, 68163 Mannheim (DE)
(74) Vertreter: Lavall, Christian Henner

(57) **Zusammenfassung**

Die Erfindung betrifft ein Stufenlosgetriebe mit einer Eingangswelle, einer Ausgangswelle, einer Zwischenwelle, einem Variatorgetriebe, einem hydrostatisches Getriebe, einem Gehäuse und einem Lagerschild, wobei das hydrostatische Getriebe in einer seitlichen Ansicht in der Einbaulage geometrisch parallel zum Variatorgetriebe angeordnet ist, und der Leistungsfluss zwischen dem hydrostatischen Getriebe und dem Variatorgetriebe aufteilbar ist, wobei die Ausgangswelle in Achsrichtung gesehen, in der Einbaulage horizontal und vertikal zur Eingangswelle versetzt ist, wobei das Gehäuse einstückig und einseitig offen ist, und die Komponenten innerhalb des Stufenlosgetriebes von dem Lagerschild im montierten Zustand im Gehäuse gehalten werden, wobei das Gehäuse und/oder der Lagerschild ebene Flächen auf den Außenseiten aufweisen, die dazu ausgebildet sind, Modulkomponenten auf einer Außenseite des Stufenlosgetriebes zu befestigen.

## Beschreibung

Die Erfindung ist ein Stufenlosgetriebe mit einer hydraulischen Komponente für den Einsatz in Fahrzeugen.

Stufenlosgetriebe mit hydraulischen Komponenten sind in landwirtschaftlichen Fahrzeugen im Einsatz. Der Betrieb ermöglicht eine Aufteilung der Antriebsleistung über einen hydraulischen und einen mechanischen Zweig des Getriebes zusammen mit einem stufenlosen Schalten der jeweiligen Gangstufen beziehungsweise Gangbereiche. In der Landwirtschaft sind unterschiedlichen Fahranforderungen an den Antrieb gestellt. Zum einen ist das Fahren auf Kraftfahrwegen Voraussetzung für Transportarbeiten bei einem geringen bis mittleren Drehmoment. Zum anderen ist das Bearbeiten von Flächen mit Hilfe von Anbaugeräten mit einem mittleren bis hohen Drehmoment erforderlich. Hydraulische Stufenlosgetriebe haben sich in diesem Gebiet als vorteilhaft erwiesen. Wartung und Robustheit sind in diesen Bereichen von Vorteil, zusammen mit einer hohen Standzeit.

Hydraulische Stufenlosgetriebe weisen im Allgemeinen einen Hydrostaten auf, einen Schaltbereich, sowie eine Einrichtung für das Umschalten zwischen Vorwärts- und Rückwärtsbetrieb. Um die Effizienz eines solchen Getriebes zu steigern, wird üblicherweise die Anzahl der Zahneingriffe zwischen verwendeten Zahnrädern minimiert.

Der Bauraum des Getriebes ist durch die daran angeschlossenen Bereiche limitiert, dies trifft insbesondere auf die Baulänge in Fahrzeugrichtung solcher Getriebe zu. Gleichzeitig ist die Bauhöhe, die Erstreckung in vertikaler Richtung, ebenfalls limitiert durch Vorgaben der Achspositionen innerhalb des Getriebes in Relation zur Eingangswelle und zur Ausgangswelle, so dass eine beliebige Verkleinerung des Baumraums nicht erfolgen kann.

Die vorliegende Erfindung löst die angesprochenen Problemstellungen, indem ein stufenloses Getriebe zur Verfügung gestellt wird, dass einen verkleinerten Bauraum aufweist. Weiterhin sind bei der Erfindung die Zahneingriffe minimiert.

Das erfindungsgemäße Stufenlosgetriebe weist eine Eingangswelle, eine Ausgangswelle, eine Zwischenwelle, ein Variatorgetriebe, ein hydrostatisches Getriebe, ein Gehäuse und ein Lagerschild auf, wobei das Gehäuse alle Wellen und Komponenten, zumindest teilweise umschließt, und eine Eingangsseite zur Leistungseinleitung und eine Ausgangsseite zur Leistungsabgabe aufweist, wobei das Stufenlosgetriebe eine Einbaulage aufweist, die im Betrieb vorgesehen ist, wobei die Eingangswelle über einen oder mehrere Zahneingriffe mittels Zahnrädern mit der Zwischenwelle verbunden ist, wobei auf der Zwischenwelle das Variatorgetriebe angeordnet ist, wobei die Zwischenwelle über einen oder mehrere Zahneingriffe mit der Ausgangswelle verbunden ist, wobei das hydrostatische Getriebe in einer seitlichen Ansicht in der Einbaulage geometrisch parallel zum Variatorgetriebe angeordnet ist, und der Leistungsfluss zwischen dem hydrostatischen Getriebe und dem Variatorgetriebe aufteilbar ist, wobei die Ausgangswelle in Achsrichtung gesehen, in der Einbaulage horizontal und vertikal zur Eingangswelle versetzt ist, wobei das Gehäuse einstückig und einseitig offen ist, und die Komponenten innerhalb des Stufenlosgetriebes von dem Lagerschild im montierten Zustand im Gehäuse gehalten werden, wobei das Gehäuse und/oder der Lagerschild ebene Flächen auf der Eingangs- und/oder Ausgangsseite aufweisen, die dazu ausgebildet sind, Modulkomponenten auf einer Außenseite des Stufenlosgetriebes zu befestigen.

Die Eingangswelle leitet die Antriebsleistung von der Antriebswelle in das Stufenlosgetriebe. Über die Zwischenwelle und die Ausgangswelle wird die Antriebsleistung an angeschlossene Module abgegeben. Das Variatorgetriebe ist mittels Zahnradkopplungen und Kupplungen in der Lage unterschiedliche Geschwindigkeitsbereiche für den Antrieb des Fahrzeugs zur Verfügung zu stellen. Das hydrostatische Getriebe innerhalb des Stufenlosgetriebes stellt einen Leistungszweig dar, über den ein Teil der Leistung parallel zum Variatorgetriebe geleitet wird. Durch die Erfindung wird somit eine kompakte Ausbildung eines Stufenlosgetriebes ermöglicht, bei einer verkürzten Baulänge. Durch den Versatz und die geometrisch parallele, also in der Einbaulage auf dem gleichen Abschnitt in der Längsrichtung der Wellen, wird zusätzlicher Bauraum in der Länge eingespart und kann somit für weitere Module, etwa eine Schmierstoffversorgung oder einen Allradantrieb verwendet werden.

In einer Weiterbildung weist die Ausgangswelle (30) eine Vorwärts-Rückwärtskupplung (90) auf.

Durch das Vorsehen der Vorwärts-Rückwärtskupplung auf der Ausgangswelle kann weiter Bauraum in der Länge des Getriebes eingespart werden.

Bei einer weiteren Ausbildung der Erfindung weist die Ausgangswelle eine Vorwärtskupplung und die Zwischenwelle eine Rückwärtskupplung auf.

Die Anordnung ermöglicht die platzsparende Unterbringung der Rückwärtskupplung und dem damit verbundenen Zwischenzahnrad zur Drehrichtungsumkehr.

In einer Weiterbildung weist die Ausgangswelle eine Rückwärtskupplung und die Zwischenwelle eine Vorwärtskupplung auf.

Die Anordnung ermöglicht die platzsparende Unterbringung der Rückwärtskupplung und dem damit verbundenen Zwischenzahnrad zur Drehrichtungsumkehr.

Bei einer weiteren Ausbildung der Erfindung ist das Variatorgetriebe ein Umlaufrädergetriebe und/oder ein Überlagerungsgetriebe.

Die Ausbildung als Umlaufrädergetriebe ermöglicht einen kleinen Bauraum bei gleichzeitig hoher Spreizung des Getriebes. Das Umlaufrädergetriebe hat durch die minimal erforderlichen Zahneingriffe eine hohe Effizienz. Durch die Ausführung als Überlagerungsgetriebe kann das hydrostatische Getriebe und dessen Leistungsausgang als weiterer Eingang für das Variatorgetriebe verwendet werden.

In einer Weiterbildung weist das Stufenlosgetriebe eine Nebenwelle auf. Die Nebenwelle kann für die Anordnung des hydrostatischen Getriebes verwendet werden.

Bei einer weiteren Ausbildung der Erfindung ist die Zwischenwelle über ein oder zwei Zahneingriffe mit einem Eingang des hydrostatischen Getriebes verbunden, ein Ausgang des hydrostatischen Getriebes mit einem Eingang des Variatorgetriebes mittels eines Zahneingriffs verbunden.

Die Minimierung der notwendigen Zahneingriffe verbessert die Effizienz des Stufenlosgetriebes und die Auswirkung auf die Geräuschentwicklung und den Fahrkomfort.

In einer Weiterbildung ist Ausgangswelle kürzer als die Eingangswelle und in Achsrichtung in der Einbaulage versetzt zur Eingangswelle angeordnet.

Die Verkürzung der Ausgangswelle verringert den Bauraum in Längsrichtung des Stufenlosgetriebes. Die Versetzung der Ausgangswelle führt dazu, dass sämtliche Zahnräder der Eingangs- und Ausgangswelle auf einer senkrechten Ebene liegen, entweder mit einer Zahnflanke oder mit den Mitten der Zahnbreite. Durch die Anordnung wird ein einheitliches Maß zur Lagerung der Zahnräder und der Welle im Lagerschild ermöglicht. Das Lagerschild ist somit in einer flachen Form ausführbar ohne Vorsprünge. Dies führt wiederrum zu Materialersparnis, Gewichtsreduktion und zu einer robusten Abdichtung zwischen Gehäuse und Lagerschild, da eine komplizierte Dichtungsgeometrie vermieden wird.

Nach einer Ausführung ist das hydrostatische Getriebe (60) in einer Einbaulage in der untersten Position unter allen anderen Wellen angeordnet.

Die Anordnung des hydrostatischen Getriebes an unterster Position in der Einbaulage erlaubt eine Raumaufteilung, bei der die Eingangswelle und die Ausgangswelle in einer höheren Position angeordnet sind und gleichzeitig zueinander in eine horizontale und vertikale Richtung versetzt sind. Mittels dieser Anordnung kann der nötige Bauraum in der Länge stark reduziert werden, da die einzelnen Komponenten parallel angeordnet sind.

Bei einer weiteren Ausbildung der Erfindung liegen die angeordneten Zahnräder auf einer Seite im Inneren des Gehäuses in der Einbaulage in Längsrichtung mit der Zahnflanke auf der gleichen Ebene, oder mit der Mitte der jeweiligen Zahnbreite auf einer gemeinsamen Ebene, die senkrecht zu den Wellen liegt.

Die Ausrichtung aller Zahnräder auf einer Seite des Getriebes in Querrichtung gesehen, bietet die Möglichkeit, eine gemeinsame Lagerung im Lagerschild des Gehäuses auszubilden. Die Anordnung ermöglicht einen ebenen Abschluss für den Lagerschild, so dass dieser ebenfalls mit einer durchgehenden Ebene ausgestattet ist. Dies ist besonders vorteilhaft zum weiteren Anschluss von Modulen an das Stufenlosgetriebe.

In einer Weiterbildung ist die Eingangswelle in einer seitlichen Ansicht in der Einbaulage an oberster Position über allen anderen Wellen angeordnet.

Die Anordnung an oberster Position zusammen mit dem hydrostatischen Getriebe in der untersten Position ermöglicht es, Bauraum einzusparen und erlaubt die kompakte Anordnung von hydrostatischem Getriebe und Variatorgetriebe in einer parallelen Ausführung. Die Gesamtlänge des Stufenlosgetriebes ist reduziert und insgesamt wird weniger Material verwendet.

Bei einer weiteren Ausbildung der Erfindung ist der Lagerschild offen oder geschlossen ausgeführt.

In der offenen Ausführung kann der Lagerschild Öffnungen aufweisen zum Durchleiten von Betriebsstoffen, z.B. Schmierstoff. Ebenfalls können Öffnungen für hydraulische Leitungen vorgesehen werden, sowie für elektrische Leitungen oder sogar für mechanische Wellen oder Anschlüsse. Die Ausführung ermöglicht den direkten Anschluss weiterer Funktionsmodule an das Gehäuse bzw. den Lagerschild des Stufenlosgetriebes.

Weitere Ausführungen der Erfindung werden anhand der Figuren beschrieben. Dabei zeigt
Figur 1 ein Diagramm des stufenlosen Getriebes;
Figur 2 eine Ansicht in Querrichtung der Einbaulage mit den Positionen der Wellen im stufenlosen Getriebe.

Das Stufenlosgetriebe 10 weist eine Eingangswelle 20 auf, die über wenigstens einen Zahneingriff mit der Zwischenwelle 40 verbunden ist. Die Zwischenwelle 40 ist einerseits mit einem Eingang des Variatorgetriebes 50 verbunden, andererseits mittels weiteren Zahneingriffen mit der Nebenwelle 100, die wiederrum mit dem Eingang des hydrostatischen Getriebes 60 verbunden ist. Auf einer Ausgangsseite des hydrostatischen Getriebes 60 erfolgt mittels einem weiteren Zahneingriff die Einleitung in einen Eingang des Variatorgetriebes 50. Das Variatorgetriebe 50 ist mit einem Ausgang mittels Zahneingriff mit der Vorwärts-Rückwärts-Einheit 90 und deren Kupplung verbunden. Nach der Vorwärts-Rückwärts Einheit 90 erfolgt die Leistungsabgabe an angeschlossene Module und an den Fahrantrieb.

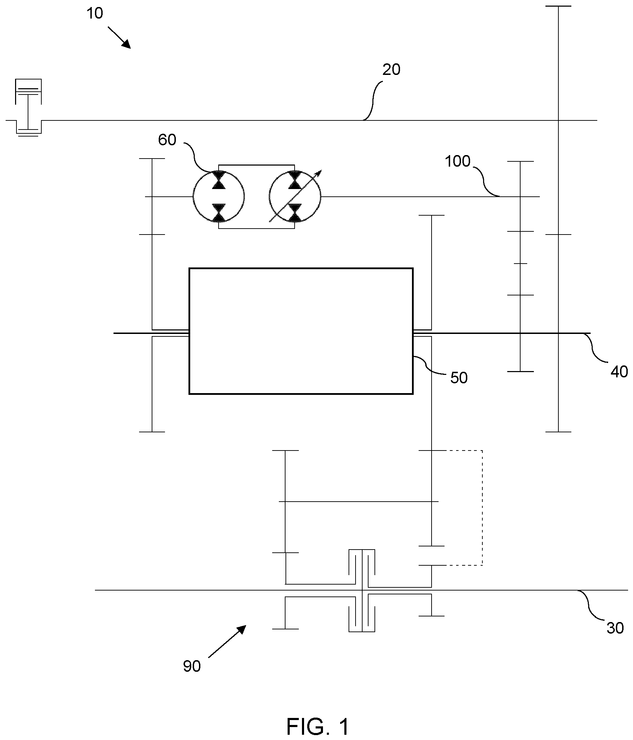

Die Eingangswelle 20 kann weist auf einer Seite eine Verzahnung auf, die die Leistung an die Zwischenwelle 40 übersetzt. Die Übersetzung von der Zwischen- auf die Nebenwelle 40, 100 kann mit einer Drehrichtungsumkehr erfolgen, wie in Figur 1 gezeigt. Das hydrostatische Getriebe 60 stellt einen Leistungszweig dar, das Variatorgetriebe 50 einen weiteren. Die Leistungszweige werden im Variatorgetriebe 50 summiert und die Summe mittels einer Verzahnung an die Vorwärts-Rückwärts-Einheit 90 abgegeben. Die Vorwärts-Rückwärts-Einheit 90 schaltet durch eine Kupplung entweder die Vorwärts- oder die Rückwärtsfahrt.

Das Variatorgetriebe 50 kann als Umlaufgetriebe ausgeführt sein, wobei hier mittels Überlagerung, das heißt durch die auftretenden Drehzahl- und Drehmomentunterschiede der beiden Leistungszweige, das Ausgangsmoment und die Ausgangsdrehzahl festgelegt werden.

Figur 1 stellt ein sogenanntes Stick-Diagramm dar, bei welchem die funktionalen Zusammenhänge der Wellen und Elemente wiedergegeben werden. Somit ist die lokale Anordnung der Wellen nicht dargestellt. Das hydrostatische Getriebe 60 ist in der Erfindung an unterster Stelle vorgesehen, so dass die Ausgangswelle 30 in einer mittleren Position angeordnet ist. Figur 1 steht der Anordnung nicht entgegen, sondern beschreibt die Funktionsweise des Stufenlosgetriebes 10 in einer zweidimensionalen Wiedergabe.

Figur 1 zeigt, dass die Verzahnung von der Eingangswelle 20 und der Zwischenwelle 40 in einer Ebene angeordnet sind.

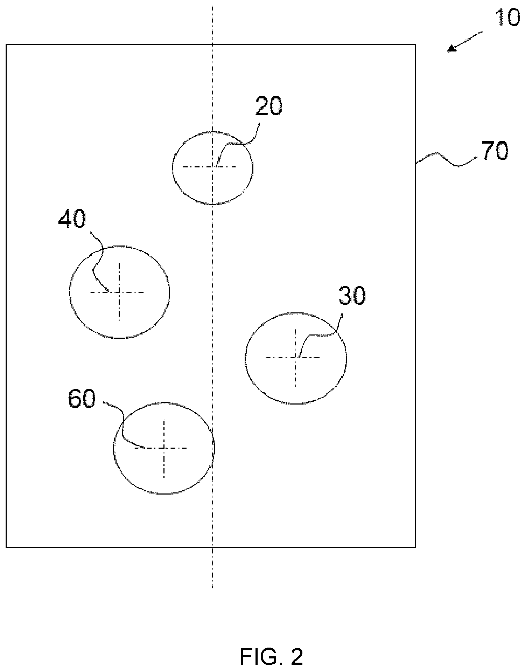

Figur 2 beschreibt ein Ausführungsbeispiel des Stufenlosgetriebes 10 mit einer Wellenanordnung in einer Längssicht in Achsrichtung. Das Gehäuse 70 umschließt die einzelnen Komponenten des Stufenlosgetriebes 10 zumindest teilweise. Das Gehäuse wird durch den Lagerschild 80 abgedeckt oder verschlossen. Der Lagerschild 80 kann Öffnungen aufweisen, durch welche Betriebsstoffe eingeleitet werden oder mechanische Verbindungen hergestellt werden. Der Lagerschild 80 kann auch in einer vollständig abdichtenden Ausbildung angeordnet sein, so dass lediglich mechanische Verbindungen mittels Wellen realisiert sind, wobei die Wellen abgedichtet sind.

Die Eingangswelle 20 befindet sich in der Einbaulage in der obersten Position. Mit dieser Anordnung kann der Abstand zwischen der Eingangs- und der Ausgangswelle 20, 30 vergrößert werden, um alle Komponenten auf den jeweiligen Wellenabschnitten anzuordnen. Horizontal und vertikal versetzt darunter ist die Zwischenwelle 40 angeordnet. Die Zwischenwelle 40 umfasst das Variatorgetriebe 50 und ist mit einem Zahneingriff mit der Eingangswelle 20 verbunden.

Die Ausgangswelle 30 ist zur Eingangswelle 20 und zur Zwischenwelle 40 horizontal und vertikal versetzt unterhalb der Zwischenwelle 40 angeordnet. Diese Anordnung hat den Vorteil, dass der Bauraum für das Variatorgetriebe 50, als auch für das hydrostatische Getriebe 60 optimal im Gehäuse 70 angeordnet werden kann. Weiterhin ist es dadurch möglich, beide Getriebe 50, 60 parallel zueinander anzuordnen.

Das hydrostatische Getriebe 60 ist in der untersten Position in der Einbaulage im Stufenlosgetriebe 10 angeordnet. Die Anordnung erlaubt eine optimale Bauraumausnutzung, sowie einen einfachen Wartungszugang innerhalb des Gehäuses 70.

Der Leistungspfad des Stufenlosgetriebes 10 wird über die Eingangswelle 20 geführt und teilt sich auf der Zwischenwelle 40 über ein oder mehrere Zahneingriffe zwischen dem hydrostatischen Getriebe 60 und dem Variatorgetriebe 50 auf. Der Leistungspfad wird nach dem hydrostatischen Getriebe 60 im Variatorgetriebe 50 wieder zusammengeführt, wobei das Variatorgetriebe 50 als Überlagerungsgetriebe ausgeführt ist. Der Leistungspfad wird dann über die Vorwärts-Rückwärts-Kupplung 90 an die Ausgangswelle 30 geführt.

Das vorgestellte Stufenlosgetriebe 10 ermöglicht eine kompakte und in Bauraumlänge entlang der Welle gesehen, eine kurze Konstruktion, die eine vorteilhafte Integration in den Antriebsstrang von Fahrzeugen ermöglicht. Durch die Erfindung werden die Anwendungsmöglichkeiten erweitert, sowie ein modularer Aufbau des Antriebsstrangs. An die ebenen Außenflächen des Stufenlosgetriebes 10 können mit verringertem Aufwand weitere Module und Komponenten in einer standardisierten Ausführung angeschlossen werden. Das Stufenlosgetriebe 10 erlaubt eine Skalierung über weitere Modellreihen, sowie eine Standardisierung der Module zum Anschluss.

## Patentansprüche

1. Stufenlosgetriebe (10) aufweisend
eine Eingangswelle (20),
eine Ausgangswelle (30),
eine Zwischenwelle (40),
ein Variatorgetriebe (50),
ein hydrostatisches Getriebe (60),
ein Gehäuse (70) und ein Lagerschild (80), wobei das Gehäuse (70) alle Wellen und Komponenten zumindest teilweise umschließt, und eine Eingangsseite zur Leistungseinleitung und eine Ausgangsseite zur Leistungsabgabe aufweist, wobei das Stufenlosgetriebe (10) eine Einbaulage aufweist, die im Betrieb vorgesehen ist,
wobei die Eingangswelle (20) über einen oder mehrere Zahneingriffe mittels Zahnrädern mit der Zwischenwelle (40) verbunden ist,
wobei auf der Zwischenwelle (40) das Variatorgetriebe (50) angeordnet ist, wobei die Zwischenwelle (40) über einen oder mehrere Zahneingriffe mit der Ausgangswelle (30) verbunden ist,
wobei das hydrostatische Getriebe (60) in einer seitlichen Ansicht in der Einbaulage geometrisch parallel zum Variatorgetriebe (50) angeordnet ist, und der Leistungsfluss zwischen dem hydrostatischen Getriebe (60) und dem Variatorgetriebe (50) aufteilbar ist,
wobei die Ausgangswelle (30) in Achsrichtung gesehen, in der Einbaulage horizontal und vertikal zur Eingangswelle (20) versetzt ist,
wobei das Gehäuse (70) einstückig und einseitig offen ist, und die Komponenten innerhalb des Stufenlosgetriebes (10) von dem Lagerschild (80) im montierten Zustand im Gehäuse (70) gehalten werden,
wobei das Gehäuse (70) und/oder der Lagerschild (80) ebene Flächen auf den Außenseiten aufweisen, die dazu ausgebildet sind, Modulkomponenten auf einer Außenseite des Stufenlosgetriebes (10) zu befestigen.

2. Stufenlosgetriebe (10) nach Anspruch 1, **dadurch gekennzeichnet, dass** die Ausgangswelle (30) eine Vorwärts-Rückwärtskupplung (90) aufweist.

3. Stufenlosgetriebe (10) nach Anspruch 1, **dadurch gekennzeichnet, dass** die Ausgangswelle (30) eine Vorwärtskupplung und die Zwischenwelle (40) eine Rückwärtskupplung aufweist.

4. Stufenlosgetriebe (10) nach Anspruch 1, **dadurch gekennzeichnet, dass** die Ausgangswelle (30) eine Rückwärtskupplung und die Zwischenwelle (40) eine Vorwärtskupplung aufweist.

5. Stufenlosgetriebe (10) nach einem der vorangehenden Ansprüche, **dadurch gekennzeichnet, dass** das Variatorgetriebe (50) ein Umlaufrädergetriebe und/oder ein Überlagerungsgetriebe ist.

6. Stufenlosgetriebe (10) nach einem der vorangehenden Ansprüche, **dadurch gekennzeichnet, dass** das Stufenlosgetriebe (10) eine Nebenwelle aufweist.

7. Stufenlosgetriebe (10) nach einem der vorangehenden Ansprüche, **dadurch gekennzeichnet, dass** die Zwischenwelle (40) über ein oder zwei Zahneingriffe mit der mit einem Eingang eines hydrostatischen Getriebes (60) verbunden ist, ein Ausgang des hydrostatischen Getriebes (60) mit einem Eingang des Variatorgetriebes (60) mittels eines Zahneingriffs verbunden ist.

8. Stufenlosgetriebe (10) nach einem der vorangehenden Ansprüche, **dadurch gekennzeichnet, dass** Ausgangswelle (30) kürzer ist als die Eingangswelle (20) und in Achsrichtung in der Einbaulage versetzt zur Eingangswelle (20) angeordnet ist.

9. Stufenlosgetriebe (10) nach einem der vorangehenden Ansprüche, **dadurch gekennzeichnet, dass** das hydrostatische Getriebe (60) in einer Einbaulage in der untersten Position unter allen anderen Wellen angeordnet ist.

10. Stufenlosgetriebe (10) nach einem der vorangehenden Ansprüche, **dadurch gekennzeichnet, dass** die angeordneten Zahnräder auf einer Seite im Inneren des Gehäuses (70) in der Einbaulage mit der Zahnflanke auf der gleichen Ebene liegen, oder mit der Mitte der jeweiligen Zahnbreite auf einer gemeinsamen Ebene liegen, die senkrecht zu den Wellen liegt.

11. Stufenlosgetriebe (10) nach einem der vorangehenden Ansprüche, **dadurch gekennzeichnet, dass** die Eingangswelle (20) in einer seitlichen Ansicht in der Einbaulage an oberster Position über allen anderen Wellen angeordnet ist.

12. Stufenlosgetriebe (10) nach einem der vorangehenden Ansprüche, **dadurch gekennzeichnet, dass** der Lagerschild (80) offen oder geschlossen ausgeführt ist.
